# EUROPEAN PATENT SPECIFICATION

(11) **EP 3 999 756 B1**
(45) Date of publication and mention of the grant of the patent: **14.12.2022**
(21) Application number: 20736905.9
(22) Date of filing: 14.07.2020
(51) Int. Cl.: F16D 65/12

(54) **DISK BRAKE FOR MOTORCYCLE**
SCHEIBENBREMSE FÜR MOTORRAD
FREIN À DISQUE POUR MOTOCYCLETTE

(30) Priority: 16.07.2019 IT 201900011892
(43) Date of publication of application: 25.05.2022
(73) Proprietor: Ferrante, Stefano, 38050 Imer (TN) (IT)
(72) Inventor: Ferrante, Stefano, 38050 Imer (TN) (IT)
(74) Representative: Conti, Marco
(86) International application number: PCT/IB2020/056609
(87) International publication number: WO 2021/009677

(56) References cited:
- EP-A1- 2 371 578
- EP-A2- 1 122 162
- EP-A2- 2 557 004
- JP-A- 2008 030 648
- JP-A- 2012 202 869
- US-A1- 2015 069 817

## Description

### Technical field

This invention relates to a floating disc brake for motorcycles, by which a lightening of the hub of the wheel on which the disc brake operates is achieved, and therefore a lightening of the rotary unit comprising the disc brake and the wheel, and of the motorcycle comprising the rotary unit.

### Background art

In the floating disc brakes for motorcycles the disc comprises a support keyed on the hub and a brake disc positioned around the support. The brake disc is connected to the support by a connection system. The connection system defines a constraint between the disc and the support such as to ensure that the disc is integral with the rotation of the support about its axis operatively coinciding with the axis of the wheel, in such a way that the braking torque exerted by the gripper on the disc transfers to the support, and from this to the hub, and then discharges onto the ground through the other components of the wheel.

The connection system is floating in the sense that it gives a certain axial clearance between the disc and the support, in such a way as to allow a floating at least axial between the disc and the support along the axis of the wheel. The at least axial floating is to be understood as a limited movement between disc and support which comprises at least one translational component along the axis of the wheel. By means of this movement, the disc is given a possibility of adjustment, by means of which the disc can be self-aligned with the gripper so as to compensate for any deformations which could have a negative effect on the mechanics of the braking in the context of contact between the disc and the gripper.

The floating connection system defines a plurality of connection points angularly distributed around the axis of the support. The connection system may currently be of a first type or of a second type.

The first type comprises a respective pair of recesses for each connection point, one made on the radially outermost edge of the support and the other made on the radially inner edge of the disc, in such a way as to define a respective housing where a body, or boss, is positioned, which is fixed to both disc and support in such a way as to contribute to defining the coupling between disc and support in order to transmit the rotation. The second type comprises, for each connection point, a respective seat made in the support and a respective protrusion which is integral with the disc and is inserted in the respective seat, in such a way that the contact between protrusion and seat contributes to the coupling of the disc with the rotation of the support.

Both types require that the hub is structurally configured to transmit and therefore withstand the braking torque, resulting in an increase in the overall weight of the rotary unit which comprises the wheel and the brake. A floating disc brake for motorcycles according to the invention and/or according to any one of the accompanying brake claims makes it possible to achieve a lightening of the wheel comprising the brake.

Moreover, in the current disc brake solutions the brake is significantly influenced by the bending deformations of the wheel due to the keying of the support on the hub: the high radial distance between the hub and disc, and therefore the significant radial extension of the support, amplifies the movements of the disc following deformations of the wheel, which results in an increase in the gradual wear of the braking system as well as potential dynamic problems such as vibrations or pulsations during braking, uncontrolled moving of the braking pads away from the surface of the disc with consequent variability of the stroke of the brake lever.

A floating disc for motorcycle belonging to the state of the art is disclosed in EP 1 122 162.

### Aim of the invention

The aim of the invention is to provide a braking system, a rotary unit and a method which overcome the above-mentioned drawbacks of the prior art. Said aim is fully achieved by the braking system, the rotary unit and the method according to the invention as characterised in the appended claims.

A braking system according to the invention and according to one or more of the appended system claims comprises at least a disc brake according to the invention and according to any one of the accompanying brake claims, and makes it possible to reduce the progressive wear of the braking system.

In particular, the disc brake comprises a supporting crown. The disc brake comprises a brake disc. The brake disc is configured to receive a braking action exerted on the disc by a gripping element, for example a gripper. The brake disc is preferably situated around the crown. The braking action is substantially an application of a braking torque from the gripper on the brake disc.

The disc brake comprises a fixing system. The fixing system is connected to the crown. The fixing system is connected to the wheel. The fixing system is configured for connecting the crown to the wheel. According to an embodiment, the fixing system is configured for rotating the wheel with the crown, in such a way that a rotation of the wheel about a relative axis corresponds to a rotation of the crown about a relative axis.

The disc brake comprises a connection system, preferably floating. According to an embodiment wherein it is a floating connection system, the crown and the brake disc are mutually slidable along an axial direction. Said axial mobility is defined in this invention as a floating connection condition (between the disc and the crown).

In other words, by means of the fixing system and the connection system (floating), the crown and the braking disc are integral in rotation and mutually movable axially.

The fixing system is connected to the wheel in a radial position (or in radial connection positions) which surrounds (surround) a hub of the wheel. According to a preferred embodiment, the fixing system is connected to a plurality of spokes of the wheel.

The fixing system is preferably spaced radially relative to the hub of the wheel. This makes it possible to limit the transmission through said hub of said braking torque.

A rotary unit according to the invention and/or according to any one of the appended rotary unit claims comprises a brake according to the invention and/or according to any one of the accompanying brake claims, or comprises a braking system according to the invention and/or according to any one of the appended system claims.

A motorcycle according to the invention and/or according to any one of the appended motorcycle claims comprises a rotary unit according to the invention and/or according to any one of the appended rotary unit claims. The features of a brake, a braking system, a rotary unit and a motorcycle according to the invention will become clearer from the following detailed description of respective example embodiments of the brake, braking system, rotary unit and motorcycle.

### Brief description of the drawings

The following detailed description refers to the accompanying drawings, in which:
- Figure 1 is a perspective view, without the tyre, of a possible example embodiment of a rotary unit according to the invention, the embodiment of the rotary unit comprising a possible example embodiment of a braking system according to the invention; the embodiment of the braking system in turn comprises a possible example embodiment of a floating disc brake according to the invention;
- Figure 2 is a front view of the embodiment of the rotary unit;
- Figure 3 is an exploded perspective view of the embodiment of the rotary unit;
- Figure 4 is a cross section of a first part of a fixing system configured to define, in the embodiment of the rotary unit, a condition for mounting the embodiment of the brake or at least a part of the embodiment of the braking system;
- Figure 5 is a cross section of a second part of the fixing system;
- Figure 6 is a cross section of a part of a connection system configured to define, in the embodiment of the brake, a condition of connection of a disc to a supporting crown;
- Figure 7 is an exploded perspective view of the part of Figure 6;
- Figure 8 is a partial exploded view of the embodiment of the braking system;
- Figure 9 is a view of the embodiment of the braking system without the wheel.

### Detailed description of preferred embodiments of the invention

The accompanying drawings refer to a possible example embodiment of a brake according to the present description. The term "brake" is used to mean the possible embodiment of the brake by way of example.

The brake is a floating disc brake for motorcycles.

The accompanying drawings refer to a possible example embodiment of a braking system according to the present description. The term "system" is used to mean the possible embodiment of the system by way of example. The system comprises the brake.

The accompanying drawings refer to a possible example embodiment of a rotary unit for a motorcycle according to the invention. The term "rotary unit" as used below means the possible embodiment of the rotary unit. The rotary unit is a rotary unit for motorcycles. The rotary unit comprises the brake and a wheel. The rotary unit could comprise the braking system and the wheel.

A possible example embodiment of a motorcycle according to the invention comprises the rotary unit. The term "motorcycle" is used to mean the possible embodiment of the motorcycle by way of example.

The motorcycle comprises the rotary unit.

The brake 1 comprises a supporting crown 2.

The brake 1 comprises a disc 3 located or positioned around the crown 2. The disc 3 is a braking disc configured to receive the braking action of a gripper. The braking action is the action which generates the braking torque. The disc 3 is annular in shape.

The brake 1 comprises a fixing system 4. The fixing system 4 is configured for defining a condition for fixing the crown 2 to the wheel 6. The fixing condition is such that, operatively, a rotation of the wheel 6 about a relative axis X' corresponds to a rotation of the crown 2 about a relative axis X. In the fixing condition, the axis X' of the wheel 6 coincides with the axis X of the crown 2. The wheel 6 is shown without the tyre. In other words, according to one embodiment, the wheel 6 and the crown 2 are constrained to rotate in an integral fashion.

The fixing condition corresponds to a condition of fitting of the brake 1 on the wheel 6. The assembly condition is such that the brake can operate on the wheel 6. The brake 1 could comprise further components, such as, for example, the above-mentioned gripper. At least one further component of the brake 1, such as, for example, the gripper, could be operatively not integral with the rotation of the wheel.

In the rotary unit, the crown 2 adopts the fixing condition.

The wheel 6 comprises a plurality of spokes 61. The wheel 6 comprises a hub 62. The wheel 6 comprises a channel 63 which is designed to support the tyre. Each spoke 61 extends from the hub 62 to the channel 63.

The brake 1 comprises a floating connection system 5. The connection system defines a floating connection condition between the disc 3 and the crown 2. The connection condition is such that the disc 3 can be operatively integral with the above-mentioned rotation of the crown 2 and subject to floating at least axial relative to the crown 2. The expression "floating at least axial" means a movement which comprises at least one translational component along the axis X of the crown 2, relative to the disc 3. In the condition of fixing the crown 2 to the wheel 6, except for the possibility of the disc 3 being subjected to floating at least axial relative to the crown 2, the axis X" of the disc 3 coincides with the axis X of the crown 2 and therefore with the axis X' of the wheel 6.

The axis X of the crown 2 is an axis about which the crown 2 is situated and/or positioned. The crown 2 has an angular extension about the axis X of the crown 2 and an axial extension along the axis X of the crown 2. The disc 3 is substantially coaxial with the crown 2.

The fixing system 4 is configured so that, in the fixing condition of the crown 2 to the wheel 6, the crown 2 is fixed on the plurality of spokes 61 of the wheel 6 so as to be spaced radially relative to the hub 62 of the wheel 6, so as to at least limit the transmission through said hub 61 of the above-mentioned braking torque exerted on the disc 3. The term "radially" means along a direction radial to the axis X' of the wheel 6. The braking torque could be exerted on the disc 3, as mentioned above, for example by a gripper, which is not illustrated.

In that way, the hub 62 may be lighter thanks to the limitation of the transmission of the torque through the hub 62.

It could be that the fixing system 4 is configured so that, in the fixing condition of the crown 2 to the wheel 6, the transmission of the braking torque through the hub 62 is completely excluded.

The crown 2 supports the disc 3 by means of the connection system 5. The crown 2 comprises a plurality of connecting portions 21'. The fixing portions 21 are angularly distributed about the axis X of the crown 2. Each fixing portion 21, in the fixing condition, is positioned on and facing towards a respective spoke 61.

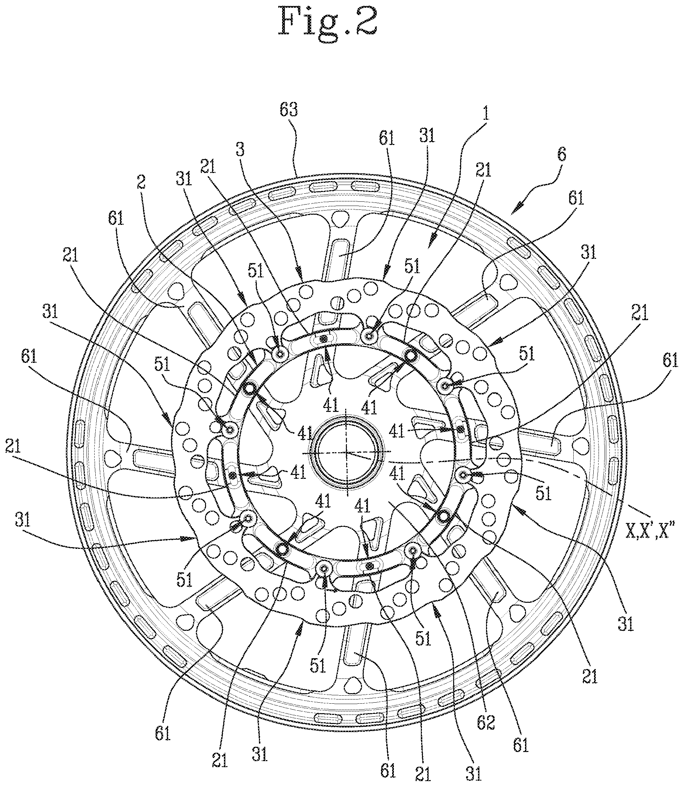

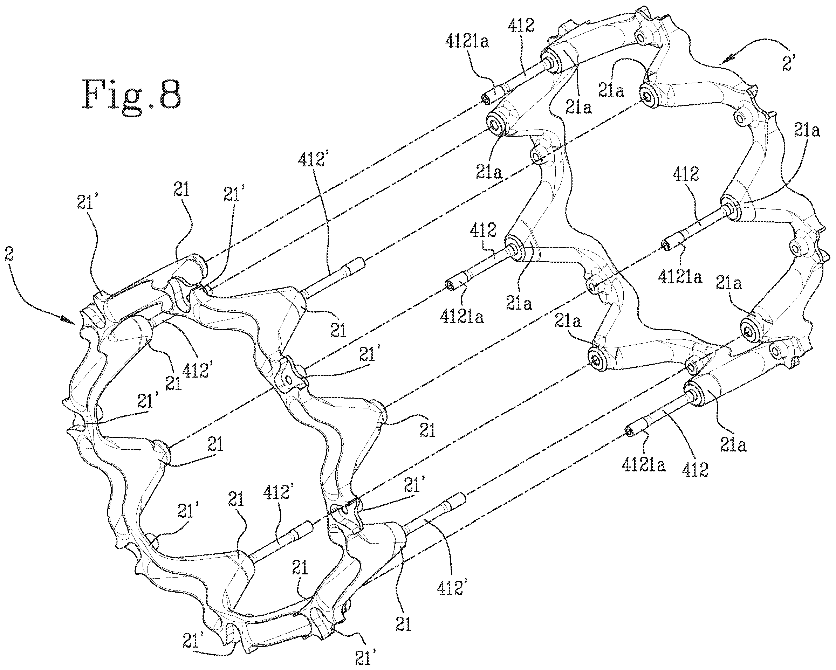

The distribution of the fixing portions 21 about the axis X of the crown 2 is clearly visible in Figure 2 and in Figure 8.

The fixing system 4 comprises a plurality of fixing units 41. Each fixing unit 41 is configured for maintaining a respective fixing portion 21 in contact with the respective spoke 61.

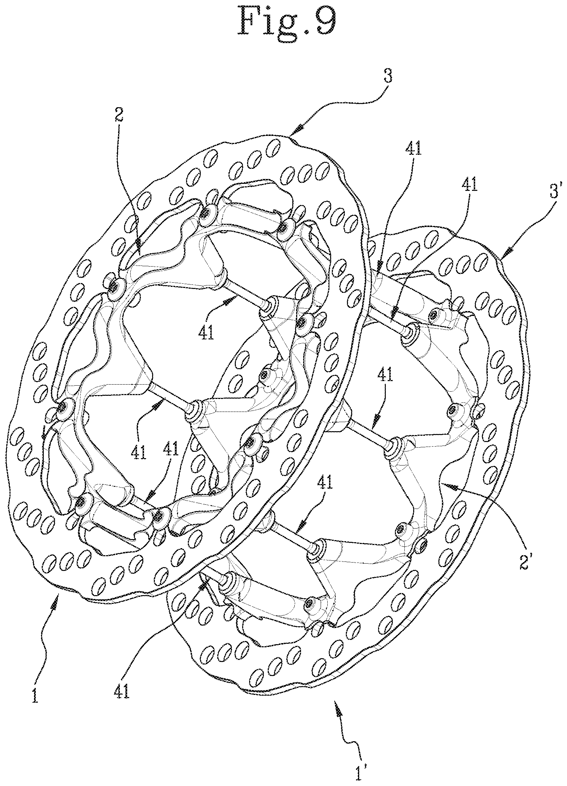

In the fixing condition, the fixing units 41 are angularly distributed about the axis X of the crown 2. The distribution of the fixing units 41 about the axis X of the crown 2 is clearly visible in Figure 2 and in Figure 9. Each fixing unit 41 defines a respective fixing point between a respective fixing portion 21 and a respective spoke 61. In this way, the stresses deriving from the braking torque are transmitted through these connection points and from these, through the other components of the wheel, the braking torque is discharged on the road.

The hub 62 may therefore be lighter, since the connection points between the respective fixing portions 21 and the respective spokes 61 are spaced radially, with reference to the axis X' of the wheel, relative to the hub 62 of the wheel 6, so as to limit and/or exclude the transmission of the braking torque through the hub 62.

The crown 2 comprises a plurality of connecting portions 21'. The connecting portions 21' are angularly distributed around the axis X of the crown 2. The distribution of the connecting portions 21' around the axis X of the crown 2 is clearly visible in Figure 8.

The disc 3 comprises a plurality of sectors 31 of the disc 3. These sectors are to be considered angularly distributed around the axis X" of the disc 3, and therefore, in the condition of connection of the disc 3 to the crown 2, around said axis X of the crown 2.

The connection system 5 comprises a plurality of connection units 51. Each connection unit 51 connects together a respective connecting portion 21' of the crown 2 and a respective sector 31 of the disc 3.

The connection units 51 are angularly distributed around the axis X of the crown 2. The distribution of the connection units 51 and the connecting portions 21' around the axis X of the crown 2 is clearly visible in Figure 2. Each connection unit 51 defines a connection point between a respective sector 31 of the disc 3 and a respective connecting portion 21' of the crown 2.

The fixing portions 21 are situated at an axial position, along the axis X of the crown 2, different from the axial position at which the connecting portions 21' are situated. In this way, the crown 2 can act as support for the disc 3, by means of the connection system 5, as it can be simultaneously fixed to the spokes 61 of the wheel 6.

The crown 2 is undulating axially along its angular extension. This means that the profile of the crown 2, projected on an imaginary cylindrical surface parallel and coaxial with the axis X of the crown 2, or on an imaginary plane passing through the axis X of the crown 2, is undulating. From another point of view, the crown 2 is shaped in such a way as to have or describe an undulating profile on the cylindrical imaginary surface. This allows the connecting portions 21' and the fixing portions 21 to be spaced from each other along the axis X of the crown 2, in such a way that the fixing portions 21 can remain in contact against the respective spokes 61 and the connecting portions 21' can be simultaneously connected to the respective sectors 31 of the disc 3.

The connecting portions 21' are alternated, about the axis X of the crown 2, with the fixing portions 21.

In this way there is a reduction in the geometrical complexity of the structure of the crown 2, achieving in any case the aim that the crown 2 lends itself or is designed for the fixing on the spokes 61 and at the same time the floating connection with the disc 3.

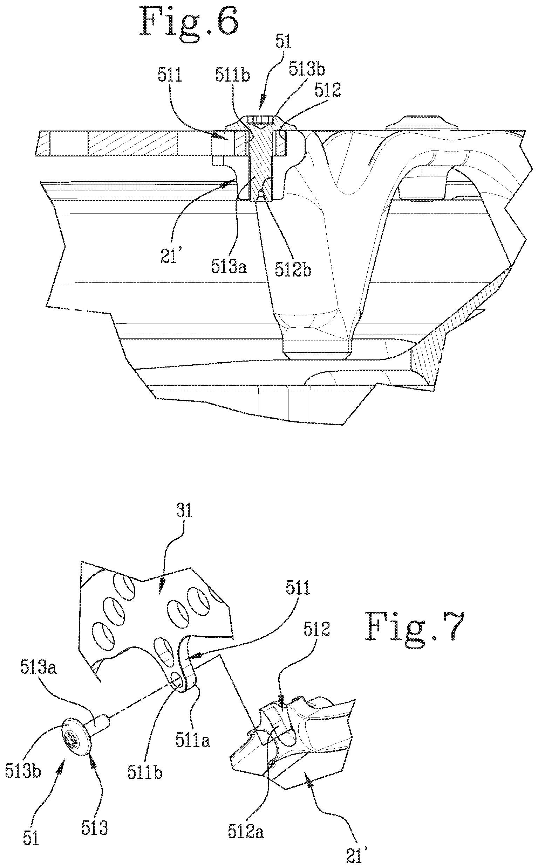

Figures 6 and 7 show a possible example of a connection unit. Each connection unit could be equal to, or have one or more features of, or all of the features of the connection unit 51 shown in Figures 6 and 7.

The connection unit 51 connects the sector 31 of the disc 3 to the connecting portion 21' of the crown 2. The connection unit 51 comprises a respective protrusion 511. The protrusion 511 is oriented, at least mainly or totally, radially relative to the axis X of the crown 2 and/or to the axis X" of the disc 3. The protrusion 511 is integral with the sector 31.

The connection unit 51 comprises a respective seat 512. The seat 512 is oriented, at least mainly or totally, radially relative to the axis X of the crown 2. The seat 512 is integral with the connecting portion 21'. The protrusion 511 is inserted in the seat 512 in such a way that the contact between an outer edge 511a of the protrusion 511 and an inner edge 512a of the seat 512 contributes to ensure that the disc 3 is integral with the rotation of the crown 2 about its axis X.

The connection unit 51 comprises a hole 511b made in the respective protrusion 511.

The connection unit 51 comprises a hole 512b made in the connecting portion 21'. The hole 512b made in the connecting portion 21', in the connected condition, is in communication with the hole 511b made in the protrusion 511.

The connection unit 51 comprises a retaining element 513. The retaining element 513 is configured to retain the protrusion 511 in the seat 512 passing through the protrusion 511 and being simultaneously fixed in the connecting portion 21'.

In particular, the retaining element 513 comprises a shank 513a. The shank 513a is fixed in the hole 512b made in the connecting portion 21'. The shank 513a passes through the hole 511b made in the protrusion 511. The retaining element 513 comprises a head 513b. The head 513b presses against the connection portion 21' in such a way as to cover the seat 512. The head 513b prevents the escape of the protrusion 511 from the seat 512 at least in a direction parallel to the axis X of the crown 2. This means that the head 513b prevents this escape limiting at least the translation of the protrusion 511 relative to the head and/or the seat 512 along a direction parallel to the axis X of the crown 2.

The connection unit 51 is configured to give axial clearance of the protrusion 511 in the seat 512, allowing a movement of the protrusion 511 in the seat 512 in the direction parallel to the axis X of the crown 2, so as to contribute to allow the floating at least axial of the disc 3 relative to the crown 2.

For this purpose, between the protrusion 511 inserted in the seat 512 and the walls of the seat 512 and/or between the protrusion 511 and the head 513b, there is a clearance which allows this movement which contributes to the floating. For this purpose, the shank 513a of the retaining element 513 and the hole 511b made in the protrusion 511 can move relative to each other in that direction, thanks also to a clearance between the holes 511b made in the protrusion 511 and shank 513a of the retaining element 513.

The retaining element 513 could be, for example, a screw fixed in the connecting portion 21' and passing through the protrusion 511 inserted in the seat 512. In that case, the hole 512b made in the connecting portion could be threaded for fixing the screw.

In order to define the condition of connection of the disc to the crown 2, the operator must mount each connecting unit 51.

The pressure of the head 513b of the retaining element 513 on the connecting portion 21' makes it possible to improve the detection by the operator of the assembly of the connection unit 51, compared with the above-mentioned first type and second type of current connection systems which require the presence of components made in such a way as to make it difficult for the operator to understand the assembly which has been performed.

In the above-mentioned first and second types of the connection system currently known, the assembly of the connection unit is quite complex since in the first type use is made of a Seeger ring which is locked with resin to prevent accidental withdrawals, whilst in the second type use is made of a thin steel plate with a complex shape.

The connection system 5 increases the assembly safety thanks to a simpler configuration of the connection system, in particular in the context of the racing wherein the times and the dynamics of use make it very difficult to use the above-mentioned first type and second types currently known.

For this reason, this configuration of the connection unit 51 according to the invention makes it easier to obtain a condition of connection between the disc 3 and the crown 2 which also allows the floating of the disc 3. Each of said outer edge 511a of the protrusion 511 and inner edge 512a of the seat 512 is at least partly rounded. Each of said outer edges 511a of the protrusion 511 and inner edge 512a of the seat 512 might be totally rounded.

The pulling of the protrusion 511 by the seat 512 is the action which ensures that the disc 3 is integral with the rotation of the crown 2 about the axis X of the crown. This pulling action is caused by the contact between the inner edge 512a of the seat 512 and the outer edge 511a of the protrusion 511.

The rounding of the outer edge 511a and the inner edge 512a is such as to reduce the wear of the seat 512 and of the protrusion 511 correlated with the state of deformation and/or stress caused by the pulling of the protrusion 511 by the seat 512.

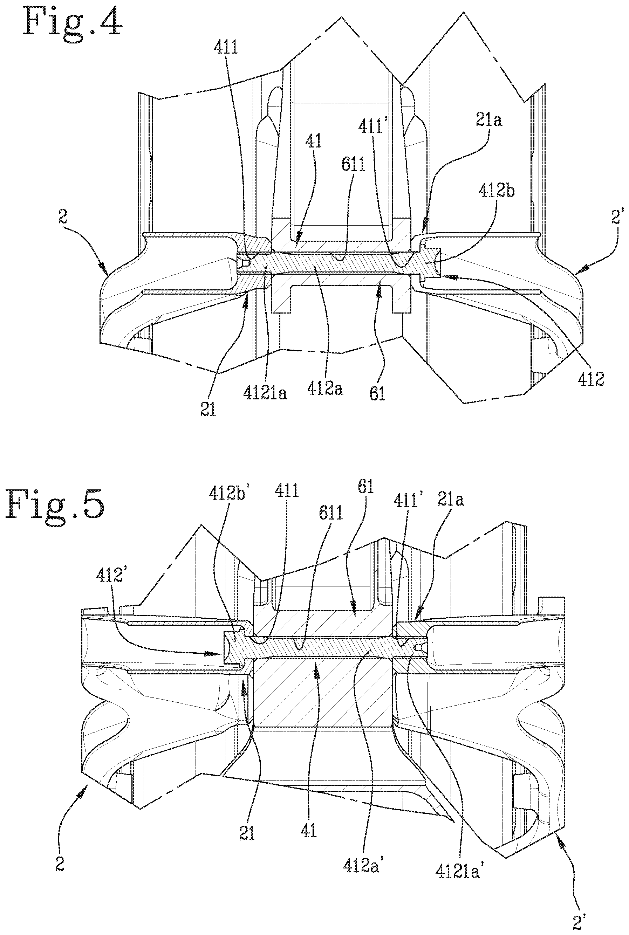

Figures 4 and 5 show a possible example of the fixing unit. Each fixing unit 41 could be equal to, or have one or more features of, or all of the features of the fixing unit 41 shown in Figures 4 and 5.

The fixing unit 41, in the fixing condition of the crown 2, fixes the fixing portion 21 to the spoke 61.

The fixing unit 41 comprises a hole 411 made in the respective fixing portion 21. The fixing unit 41 is configured so that the hole 411, made in the fixing portion 21, in said fixing condition, is in communication with a hole 611 made in the spoke 61.

The fixing unit comprises a fixing element 412 or 412'. The fixing element 412 or 412' comprises a shank 412a or 412a': The fixing element 412 or 412' is configured for fixing the fixing portion 21 to the spoke 61 by passage of the shank 412a or 412a' through the hole 411 made in the fixing portion 21 and the hole 611 made in the spoke 61.

The fixing element 412 comprises a head 412b or 412b'.

The fixing unit 41 could be considered as also comprising the hole 611 made in the spoke 61. For this reason, the fixing system 4 could be considered as comprising a respective hole 611 for each spoke 61. Each hole 611 is made through the respective spoke 61 and is oriented at least mainly or completely along a direction parallel to the axis X' of the wheel. Each hole 611 passes through the respective spoke 61.

The fixing unit 41 is configured so that the fixing element 412 or 412', for fixing the respective fixing portion 21 to the respective spoke 61, acts in accordance with a first mode or a second mode.

Figure 4 shows a fixing element 412 which acts according to the first mode. Figure 5 shows a fixing element 412' which acts according to the second mode.

If the fixing element 412 acts in accordance with the first mode, it may be said that the respective fixing unit 41 also acts in accordance with the first mode. If the fixing element 412' acts in accordance with the second mode, it may be said that the respective fixing unit 41 also acts in accordance with the second mode.

According to the first mode, shown in Figure 4, an end portion 4121a of the shank 412a is fixed in the hole 411 made in the fixing portion 21, in such a way as to pull or exert a pulling action on the fixing portion 21 and in opposition to the spoke 61.

In accordance with the second mode; the head 412b' presses on the fixing portion 21 in contrast to the spoke 61.

If the fixing element 412 acts in accordance with the first mode, in the fixing condition, the fixing element 412 is oriented in a first direction along a direction parallel to the axis X of the crown 2.

If the fixing element 412' acts in accordance with the second mode, in the fixing condition, the fixing element 412' is oriented in a second direction along a direction parallel to the axis X of the crown 2. The second direction is opposite to the first direction.

It is also possible that all the fixing elements act according to one of the two modes, or that a part acts in the first mode and another part acts in the second mode.

In order to obtain the condition for fixing the crown 2 to the wheel 6, the operator must mount each fixing unit 41. This configuration of the fixing unit 41 facilitates the assembly of the fixing unit 41, speeding up the obtaining of the fixing condition for a crown 2 supporting the disc 3 which is fixed on the spokes 61 so as to lighten the hub 62.

It should be noted that the braking system as well as comprising the disc brake 1 could also comprise a second disc brake 1'. The second disc brake 1' could be equal to, or have one or more of the features of, or all of the features described above with reference to the disc brake 1, which can also be defined as the "first disc brake".

The braking system is configured so that the fixing condition of the crown 2 of the first brake 1 corresponds to the fixing condition of the crown 2' of the second brake 1, so that one occurs by means of the other. In that sense, obtaining the condition for fixing the crown 2 of the first brake 1 occurs by and/or corresponds to obtaining the condition for fixing the crown 2' of the second brake 1', and vice versa.

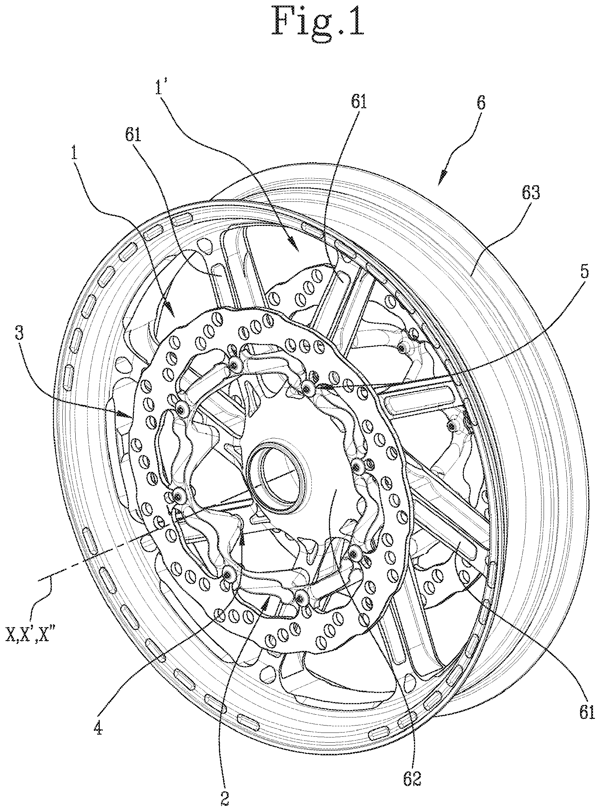

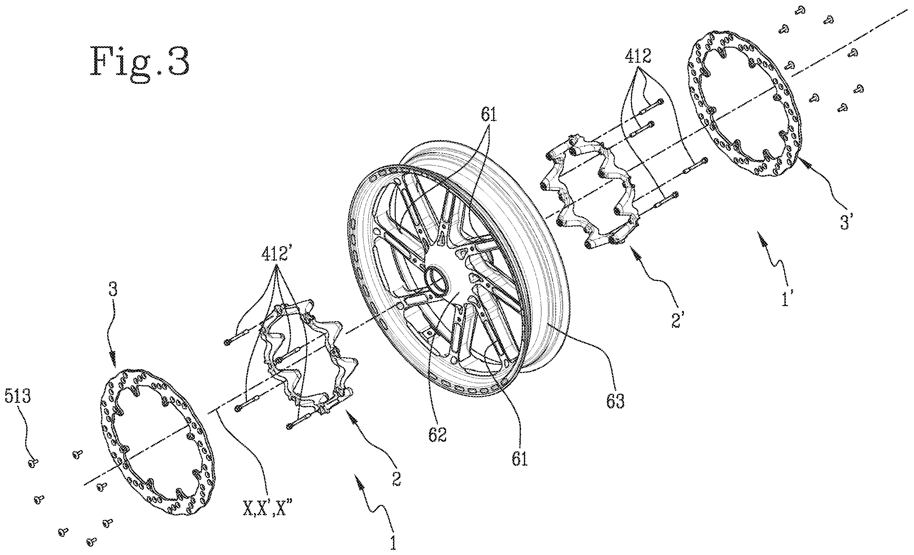

The braking system is configured so that the fixing system 4 of the first brake 1 can simultaneously define the fixing condition of the crown 2 of the first brake 1 and the fixing condition of the crown 2' of the second brake 1'. The fixing condition of both the crowns 2 and 2' corresponds to the positioning of the first brake 1 on one side of the wheel 6 and to the positioning of the second brake 1' on the opposite side of the wheel 6 with respect to the first brake 1. This situation may be inferred, for example, from Figures 1, 2 and 3.

In the fixing condition of both the crowns 2 and 2', the fixing element 412 of each fixing unit 41 of the first brake 1 acts in the first mode for the first brake 1 and in the second mode for the second brake 1'. This may be inferred from Figures 8 and 9. Figure 8 shows the braking system without the wheel, with the crown 2 of the first brake 1 and the crown 2' of the second brake 1' spaced from each other. In Figure 8 it may be inferred that the fixing elements labelled 412 act in the first mode for the first brake 1 which comprises the crown 2, and therefore in the second mode for the second brake 1' which comprises the crown 2'. In Figure 8 it may be inferred that the fixing elements labelled 412' act in the first mode for the second brake 1' which comprises the crown 2' and in the second mode for the first brake 1 which comprises the crown 2. This may be inferred from the fact that the fixing elements 412 protrude from the fixing portions 21a of the crown 2' of the second brake 1', towards the fixing portions 21 of the crown 2 of the first brake, from the side of the respective shanks, the respective end portions 4121a of which will be fixed in the respective holes made in the fixing portions 21 of the crown 2 of the first brake. Vice versa for the fixing elements 412'.

Each fixing element 412 or 412' could be a bolt and/or screw system.

As may be seen in Figure 4 or in Figure 5, the fixing element 412 or 412' passes through both the hole 411 made in the fixing portion 21 of the crown 2 of the first brake 1 and through the hole 411' made in the fixing portion 21a of the crown 2' of the second brake 1', the fixing portion 21a of the crown 2' of the second brake 1' being fixed to the same spoke 61 on which is fixed the fixing portion 21 of the crown 2 of the first brake 1.

The fixing element 412 therefore clamps a respective fixing portion 21 of the crown 2 of the first brake 1 and a respective fixing portion 21a of the crown 2' of the second brake 1' to the same spoke 61.

Figure 9 shows the fixing units 41, the first brake 1 and the second brake 1', in the condition for fixing to the wheel, but with the wheel which is not visible.

The fixing system 4 passes through the spokes of the wheel to fix both the crown 2 of the first brake 1 and the crown 2' of the second brake 1' to the spokes 61 of the wheel 6. In this way a bending stiffening of the braking system is obtained which improves the resistance of each of the disc brakes 1 or 1' relative to the possible bending deformations of the wheel, in such a way as to reduce the wear of each disc brake 1 or 1' and in general of the braking system.

In the context of the first brake 1, the fixing system 4 is configured so that, in the fixing condition of the crown 2, the fixing elements 412 acting in accordance with the first mode are alternated, about the axis X of the crown, to the fixing elements 412' acting in accordance with the second mode.

For this reason, the holes 411 made in the respective fixing portions 21 and belonging to fixing units 41 which act in accordance with the first mode, are configured for fixing the respective fixing elements 412, and therefore, for example, may or may not be threaded.

For this reason, the holes 411 made in the respective fixing portions 21 and belonging to fixing units 41 which act according to the second mode, may also not be configured for fixing the respective fixing elements 412', and therefore, for example, may or may not be threaded.

In that case, the holes 411 made in the fixing portions 21 and threaded are alternated, about the axis X of the crown 2, with the holes 411 made in the fixing portions 21 and not threaded, to ensure that, in the fixing condition, the fixing elements 412 which act in accordance with the first mode are alternated with the fixing elements 412' which act in accordance with the second mode.

This improves the resistance to wear of the brake and/or of the braking system compatibly with a correct balancing of the stresses about the axis X of the wheel, so as to obtain a further reduction in wear of the components of the wheel affected by the braking system and of the braking system itself.

It should be noted that the set of crowns 2 and disc 3 could be considered a brake disc comprising a first part corresponding to the crown 2 and a second part comprising the disc 3.

The fixing of the crown 2 to the spokes 61 of the wheel, by which the transmission of the braking torque through the hub 62 is limited or excluded, as well as lightening the hub 62, also makes it possible to lighten the supporting element corresponding to the crown 2.

## Claims

1. A floating disc brake (1) for a motorcycle comprising:
- - a supporting crown (2);
- a braking disc (3) situated around the crown (2) for receiving a braking action exerted on the disc (3) by means of a caliper, said braking action being designed to produce a braking torque;
- a fixing system (4) for defining a condition of fixing the crown (2) to the wheel (6), said fixing condition being such that a rotation of the wheel (6) about its axis (X') corresponds to a rotation of the crown (2) about its axis (X);
- a floating connection system (5) which defines a floating connection condition between the disc (3) and the crown (2), said connection condition being such that said disc (3) can be operatively integral with said rotation of the crown (2) and subject to at least axial floating relative to the crown (2);
**characterised in that**
the fixing system (4) is configured so that, in the fixing condition, the crown (2) is fixed on a plurality of spokes (61) of the wheel (6) so as to be spaced radially relative to the hub (62) of the wheel (6), so as to at least limit the transmission through said hub (62) of said braking torque.

2. The brake (1) according to claim 1, wherein:
- said crown (2) comprises a plurality of fixing portions (21) angularly distributed around the axis (X) of said crown (2), the fixing system (4) being configured so that each fixing portion (21), in said fixing condition, is positioned on and facing a respective spoke (61);
- said fixing system (4) comprises a plurality of fixing units (41), each fixing unit (41) being configured for maintaining, in the fixing condition, a respective fixing portion (21) in contact with the respective spoke (61).

3. The brake (1) according to claim 2, wherein:
- said crown (2) comprises a plurality of connecting portions (21') angularly distributed about the axis (X) of said crown (2);
- said disc (3) comprises a plurality of sectors (31) angularly distributed around the axis (X) of the crown (2);
said connection system (5) comprises a plurality of connection units (51), each connection unit (51) connecting together a respective connecting portion (21') of the crown (2) and a respective sector (31) of the disc (3).

4. The brake according to claim 3, wherein:
- the connecting portions (21') are alternated, about the axis of the crown (X), with said fixing portions (21);
- said connecting portions (21'), along the axis of the crown (2), are situated at a different height with respect to the fixing portions (21).

5. The brake (1) according to claim 4, wherein said crown (2), on an imaginary cylindrical surface, coaxial with the axis (X) of the crown (2), and parallel to said axis (X) of the crown (2), has an undulating profile, in such a way that said connecting portions (21') are situated at a different height, along said axis (X) of the crown (2), with respect to said fixing portions (21).

6. The brake (1) according to claim 3 or 4 or 5, wherein each connection unit (51) comprises:
- a respective protrusion (511) oriented at least mainly radially relative to the axis (X) of the crown (2) and integral with the respective sector (31) of the disc (3);
- a respective seat (512) oriented at least mainly radially relative to the axis (X) of the crown (2) and integral with the respective connecting portion (21'), said respective protrusion (511) being inserted in said respective seat (512) in such a way that the contact between an outer edge (511a) of said respective protrusion (511) and an inner edge (512a) of said seat (512) contributes to ensure that the disc (3) is integral with the rotation of the crown (2) about its axis (X);
- a respective hole (511b) made in the respective protrusion (511);
- a respective hole (512b) made in the respective connecting portion (21') and in communication with the hole (511b) made in the respective protrusion (511);
- a respective retaining element (513) comprising a shank (513a) fixed in the respective hole (512b) made in the connecting portion (21') and passing through said hole (511b) made in the respective protrusion (511), said respective retaining element (513) comprising a head (513b) which presses against the respective connecting portion (21') in such a way as to cover at least partly the respective seat (512), so that said head (513b) prevents the escape of the respective protrusion (511) from the respective seat (512) at least in a direction parallel to the axis (X) of the crown (2); wherein each connection unit (51) is configured to allow a movement of the respective protrusion (511) in the respective seat (512) in said direction, in such a way as to impart axial clearance to the protrusion (511) in the seat (512), so that said axial clearance can contribute to allowing the at least axial floating of the disc (3) relative to the crown (2).

7. The brake (1) according to claim 6, wherein each of said outer edge (511a) and inner edge (512a) is at least partly rounded.

8. The brake according to any one of claims 2 to 7, wherein said fixing unit (41) comprises:
- a respective hole (411) made in the respective fixing portion (21), the fixing unit (41) being configured so that the respective hole (411) made in the fixing portion (21), in said fixing condition, is in communication with a hole (611) made in the respective spoke (61);
- a respective fixing element (412; 412') comprising a respective shank (412a; 412a') and configured for fixing the respective fixing portion (21) to the respective spoke (61) by passage of said respective shank (412a; 412a') through said hole (411) made in the fixing portion (21) and the hole (611) made in the spoke (61).

9. The brake (1) according to claim 8, wherein, for each fixing unit (41):
- the fixing element (412) comprises a respective head (412b);
- the fixing unit (41) is configured so that the fixing element (412), for fixing the respective fixing portion (21) to the respective spoke (61), can act in accordance with a first mode, such that an end portion (4121a) of the shank (412a) is fixed in the hole (411) made in the fixing portion (21), in such a way as to pull the fixing portion (21) in contrast to the spoke (61), or according to a second mode; such that the head (412b') presses on the fixing portion (21) in contrast to the spoke (61).

10. The brake according to claim 9, wherein the fixing system (4) is configured so that, in the fixing condition, the fixing elements (412) acting in accordance with the first mode are alternated, about the axis (X) of the crown, with those (412') acting in accordance with the second mode.

11. A braking system for motorcycles comprising a first brake (1) and a second brake (1'), wherein:
- said first brake (1) is in accordance with claim 10;
- said second brake (1') is in accordance with claim 10;
wherein the fixing system (4) of the first brake (1) is configured so that:
- the fixing condition of the crown (2) of the first brake (1) corresponds to the fixing condition of the crown (2') of the second brake (1), so that a fixing condition occurs by means of the other;
- the fixing system (4) of the first brake (1) can simultaneously define the fixing condition of the crown (2) of the first brake (1) and the fixing condition of the crown (2') of the second brake (1') by passing the fixing system (4) through the spokes (61) of the wheel (6);
- the fixing condition of both the crowns (2, 2') corresponds to the positioning of the first brake (1) on one side of the wheel (6) and of the second brake (1') on the opposite side of the wheel (6) with respect to the first brake (1);
for each fixing unit (41) of the first brake (1), the fixing element (412; 412') acts in the first mode for the first brake (1) and in the second mode for the second brake (1'), or vice versa.

12. A rotary unit for a motorcycle comprising a brake according to any one of claims 1 to 10 and said wheel (6), or comprising a braking system according to claim 11 and said wheel (6).

13. A motorcycle comprising a rotary unit according to claim 12.

## Patentansprüche

1. Schwimmend gelagerte Scheibenbremse (1) für Motorrad, umfassend:
- einen Halterungskranz (2);
- eine Bremsscheibe (3), die rund um den Kranz (2) befindlich ist, um eine Bremswirkung aufzunehmen, die auf die Bremse (3) mittels eines Bremssattels ausgeübt wird, wobei die Bremswirkung ausgestaltet ist, um ein Bremsmoment zu erzeugen;
- ein Fixiersystem (4), um einen Fixierzustand des Kranzes (2) am Rad (6) zu definieren, wobei der Fixierzustand so beschaffen ist, dass eine Drehung des Rads (6) um seine Achse (X') einer Drehung des Kranzes (2) um seine Achse (X) entspricht;
- ein schwimmend gelagertes Verbindungssystem (5), das einen schwimmend gelagerten Verbindungszustand zwischen der Scheibe (3) und dem Kranz (2) definiert, wobei der Verbindungszustand so beschaffen ist, dass die Scheibe (3) betriebswirksam fest mit der Drehung des Kranzes (2) verbunden sein kann und einer mindestens axialen schwimmenden Lagerung relativ zum Kranz (2) ausgesetzt ist,
**dadurch gekennzeichnet, dass** das Fixiersystem (4) so ausgelegt ist, dass der Kranz (2) im Fixierzustand an einer Vielzahl von Speichen (61) des Rads (6) fixiert ist, sodass er radial relativ zur Nabe (62) des Rads (6) beabstandet ist, sodass mindestens die Übertragung des Bremsmoments durch die Nabe (62) begrenzt wird.

2. Bremse (1) nach Anspruch 1, wobei:
- der Kranz (2) eine Vielzahl von Fixierabschnitten (21) umfasst, die winkelig rund um die Achse (X) des Kranzes (2) verteilt sind, wobei das Fixiersystem (4) so ausgelegt ist, dass ein jeder Fixierabschnitt (21) im Fixierzustand auf einer jeweiligen Speiche (61) positioniert und dieser zugewandt ist;
- das Fixiersystem (4) eine Vielzahl von Fixiereinheiten (41) umfasst, wobei eine jede Fixiereinheit (41) ausgelegt ist, um im Fixierzustand einen jeweiligen Fixierabschnitt (21) in Kontakt mit der jeweiligen Speiche (61) zu halten.

3. Bremse (1) nach Anspruch 2, wobei:
- der Kranz (2) eine Vielzahl von Verbindungsabschnitten (21') umfasst, die winkelig rund um die Achse (X) des Kranzes (2) verteilt sind;
- die Scheibe (3) eine Vielzahl von Sektoren (31) umfasst, die winkelig rund um die Achse (X) des Kranzes (2) verteilt sind,
wobei das Verbindungssystem (5) eine Vielzahl von Verbindungseinheiten (51) umfasst, wobei eine jede Verbindungseinheit (51) einen jeweiligen Verbindungsabschnitt (21') des Kranzes (2) und einen jeweiligen Sektor (31) der Scheibe (3) verbindet.

4. Bremse nach Anspruch 3, wobei:
- die Verbindungsabschnitte (21') um die Achse des Kranzes (X) mit den Fixierabschnitten (21) abgewechselt sind;
- die Verbindungsabschnitte (21') entlang der Achse des Kranzes (2) an einer unterschiedlichen Höhe in Bezug auf die Fixierabschnitte (21) befindlich sind.

5. Bremse (1) nach Anspruch 4, wobei der Kranz (2) auf einer imaginären zylindrischen Oberfläche, die koaxial zur Achse (X) des Kranzes (2) und parallel zur Achse (X) des Kranzes (2) angeordnet ist, ein wellenförmiges Profil aufweist, sodass die Verbindungsabschnitte (21') an einer unterschiedlichen Höhe entlang der Achse (X) des Kranzes (2) in Bezug auf die Fixierabschnitte (21) befindlich sind.

6. Bremse (1) nach Anspruch 3 oder 4 oder 5, wobei eine jede Verbindungseinheit (51) Folgendes umfasst:
- einen jeweiligen Vorsprung (511), der mindestens hauptsächlich radial in Bezug zur Achse (X) des Kranzes (2) ausgerichtet und fest mit dem jeweiligen Sektor (31) der Scheibe (3) verbunden ist;
- eine jeweilige Aufnahme (512), die mindestens hauptsächlich radial relativ zur Achse (X) des Kranzes (2) ausgerichtet und fest mit dem jeweiligen Verbindungsabschnitt (21') verbunden ist, wobei der jeweilige Vorsprung (511) in die jeweilige Aufnahme (512) so eingefügt ist, dass der Kontakt zwischen einer Außenkante (511a) des jeweiligen Vorsprungs (511) und einer Innenkante (512a) der Aufnahme (512) dazu beiträgt zu gewährleisten, dass die Scheibe (3) fest mit der Drehung des Kranzes (2) um dessen Achse (X) verbunden ist;
- ein jeweiliges Loch (511b), das im jeweiligen Vorsprung (511) ausgebildet ist;
- ein jeweiliges Loch (512b), das im jeweiligen Verbindungsabschnitt (21') ausgebildet und in Kommunikation mit dem Loch (511b) ist, das im jeweiligen Vorsprung (511) ausgebildet ist;
- ein jeweiliges Rückhalteelement (513), umfassend einen Schaft (513a), der im jeweiligen Loch (512b) fixiert ist, das im Verbindungsabschnitt (21') ausgebildet ist, und durch das Loch (511b) geführt wird, das im jeweiligen Vorsprung (511) ausgebildet ist, wobei das jeweilige Rückhalteelement (513) einen Kopf (513b) umfasst, der gegen den jeweiligen Verbindungsabschnitt (21') drückt, sodass die jeweilige Aufnahme (512) mindestens teilweise abgedeckt wird, sodass der Kopf (513b) das Austreten des jeweiligen Vorsprungs (511) aus der jeweiligen Aufnahme (512) zumindest in einer Richtung vermeidet, die parallel zur Achse (X) des Kranzes (2) angeordnet ist, wobei eine jede Verbindungseinheit (51) ausgelegt ist, um eine Bewegung des jeweiligen Vorsprungs (511) in der jeweiligen Aufnahme (512) in dieser Richtung zu erlauben, sodass dem Vorsprung (511) in der Aufnahme (512) ein Axialspiel verliehen wird, sodass das Axialspiel dazu beitragen kann, die mindestens axiale schwimmende Lagerung der Scheibe (3) relativ zum Kranz (2) zu erlauben.

7. Bremse (1) nach Anspruch 6, wobei sowohl die Außenkante (511a) als auch die Innenkante (512a) teilweise abgerundet sind.

8. Bremse nach einem der Ansprüche 2 bis 7, wobei die Fixiereinheit (41) Folgendes umfasst:
- ein jeweiliges Loch (411), das im jeweiligen Fixierabschnitt (21) ausgebildet ist, wobei die Fixiereinheit (41) so ausgelegt ist, dass das jeweilige Loch (411), das im Fixierabschnitt (21) ausgebildet ist, im Fixierzustand in Kommunikation mit einem Loch (611) ist, das in der jeweiligen Speiche (61) ausgebildet ist;
- ein jeweiliges Fixierelement (412; 412'), das einen jeweiligen Schaft (412a; 412a') umfasst und ausgelegt ist, um den jeweiligen Fixierabschnitt (21) an der jeweiligen Speiche (61) durch das Durchführen des jeweiligen Schafts (412a; 412a') durch das Loch (411), das im Fixierabschnitt (21) ausgebildet ist, und das Loch (611), das in der Speiche (61) ausgebildet ist, zu fixieren.

9. Bremse (1) nach Anspruch 8, wobei für eine jede Fixiereinheit (41):
- das Fixierelement (412) einen jeweiligen Kopf (412b) umfasst;
- die Fixiereinheit (41) so ausgelegt ist, dass das Fixierelement (412) zum Fixieren des jeweiligen Fixierabschnitts (21) an der jeweiligen Speiche (61) nach einem ersten Modus wirken kann, sodass ein Endabschnitt (4121a) des Schafts (412a) im Loch (411), das im Fixierabschnitt (21) ausgebildet ist, fixiert ist, sodass der Fixierabschnitt (21) in Kontrast zur Speiche (61) gezogen wird, oder nach einem zweiten Modus, sodass der Kopf (412b') auf den Fixierabschnitt (21) in Kontrast zur Speiche (61) drückt.

10. Bremse nach Anspruch 9, wobei das Fixiersystem (4) so ausgelegt ist, dass die Fixierelemente (412), die nach dem ersten Modus wirken, im Fixierzustand um die Achse (X) des Kranzes mit denen (412') abgewechselt sind, die nach dem zweiten Modus wirken.

11. Bremssystem für Motorräder, umfassend eine erste Bremse (1) und eine zweite Bremse (1'), wobei:
- die erste Bremse (1) nach Anspruch 10 ausgelegt ist;
- die zweite Bremse (1') nach Anspruch 10 ausgelegt ist, wobei das Fixiersystem (4) der ersten Bremse (1) so ausgelegt ist, dass:
- der Fixierzustand des Kranzes (2) der ersten Bremse (1) dem Fixierzustand des Kranzes (2') der zweiten Bremse (1) entspricht, sodass ein Fixierzustand mittels des anderen eintritt;
- das Fixiersystem (4) der ersten Bremse (1) gleichzeitig den Fixierzustand des Kranzes (2) der ersten Bremse (1) und den Fixierzustand des Kranzes (2') der zweiten Bremse (1') definieren kann, indem das Fixiersystem (4) durch die Speichen (61) des Rads (6) geführt wird;
- der Fixierzustand beider Kränze (2, 2') dem Positionieren der ersten Bremse (1) auf einer Seite des Rads (6) und der zweiten Bremse (1') auf der anderen Seite des Rads (6) in Bezug auf die erste Bremse (1) entspricht,
wobei das Fixierelement (412; 412') für eine jede Fixiereinheit (41) der ersten Bremse (1) im ersten Modus für die erste Bremse (1) und im zweiten Modus für die zweite Bremse (1') oder umgekehrt wirkt.

12. Rotatorische Einheit für Motorrad, umfassend eine Bremse nach einem der Ansprüche 1 bis 10 und das Rad (6) oder umfassend ein Bremssystem nach Anspruch 11 und das Rad (6).

13. Motorrad, umfassend eine rotatorische Einheit nach Anspruch 12.

## Revendications

1. Frein à disque flottant (1) pour motocyclette, comprenant :
- une couronne de soutien (2) ;
- un disque de freinage (3) situé autour de la couronne (2) pour recevoir une action de freinage exercée sur le disque (3) au moyen d'un étrier, ladite action de freinage étant destinée à produire un couple de freinage ;
- un système de fixation (4) pour définir une condition de fixation de la couronne (2) à la roue (6), ladite condition de fixation étant telle qu'une rotation de la roue (6) autour de son axe (X') correspond à une rotation de la couronne (2) autour de son axe (X) ;
- un système de connexion flottant (5) qui définit une condition de connexion flottante entre le disque (3) et la couronne (2), ladite condition de connexion étant telle que ledit disque (3) peut être fonctionnellement solidaire de ladite rotation de la couronne (2) et soumis à un flottement au moins axial par rapport à la couronne (2) ;
**caractérisé en ce que** le système de fixation (4) est configuré de sorte que, dans la condition de fixation, la couronne (2) est fixée sur une pluralité de rayons (61) de la roue (6) de manière à être espacée radialement par rapport au moyeu (62) de la roue (6), de manière à au moins limiter la transmission à travers ledit moyeu (62) dudit couple de freinage.

2. Frein (1) selon la revendication 1, dans lequel :
- ladite couronne (2) comprend une pluralité de portions de fixation (21) réparties angulairement autour de l'axe (X) de ladite couronne (2), le système de fixation (4) étant configuré de sorte que chaque portion de fixation (21), dans ladite condition de fixation, est positionnée sur et face à un rayon (61) respectif ;
- ledit système de fixation (4) comprend une pluralité d'unités de fixation (41), chaque unité de fixation (41) étant configurée pour maintenir, dans la condition de fixation, une portion de fixation (21) respective en contact avec le rayon (61) respectif.

3. Frein (1) selon la revendication 2, dans lequel :
- ladite couronne (2) comprend une pluralité de portions de connexion (21') réparties angulairement autour de l'axe (X) de ladite couronne (2) ;
- ledit disque (3) comprend une pluralité de secteurs (31) répartis angulairement autour de l'axe (X) de la couronne (2) ;
ledit système de connexion (5) comprend une pluralité d'unités de connexion (51), chaque unité de connexion (51) connectant ensemble une portion de connexion (21') respective de la couronne (2) et un secteur (31) respectif du disque (3).

4. Frein selon la revendication 3, dans lequel :
- les portions de connexion (21') sont alternées, autour de l'axe de la couronne (X), avec lesdites portions de fixation (21) ;
- lesdites portions de connexion (21'), le long de l'axe de la couronne (2), sont situées à une hauteur différente par rapport aux portions de fixation (21).

5. Frein (1) selon la revendication 4, dans lequel ladite couronne (2), sur une surface cylindrique imaginaire, coaxiale à l'axe (X) de la couronne (2), et parallèle audit axe (X) de la couronne (2), présente un profil ondulé, de telle sorte que lesdites portions de connexion (21') sont situées à une hauteur différente, le long dudit axe (X) de la couronne (2), par rapport auxdites portions de fixation (21).

6. Frein (1) selon la revendication 3 ou 4 ou 5, dans lequel chaque unité de connexion (51) comprend :
- une saillie (511) respective orientée au moins principalement radialement par rapport à l'axe (X) de la couronne (2) et solidaire du secteur (31) respectif du disque (3) ;
- un siège (512) respectif orienté au moins principalement radialement par rapport à l'axe (X) de la couronne (2) et solidaire de la portion de connexion (21') respective, ladite saillie (511) respective étant insérée dans ledit siège (512) respectif de telle manière que le contact entre un bord extérieur (511a) de ladite saillie (511) respective et un bord intérieur (512a) dudit siège (512) contribue à assurer que le disque (3) est solidaire de la rotation de la couronne (2) autour de son axe (X) ;
- un trou (511b) respectif réalisé dans la saillie (511) respective ;
- un trou (512b) respectif réalisé dans la portion de connexion (21') respective et en communication avec le trou (511b) réalisé dans la saillie (511) respective ;
- un élément de retenue (513) respectif comprenant une tige (513a) fixée dans le trou (512b) respectif réalisé dans la portion de connexion (21') et passant à travers ledit trou (511b) réalisé dans la saillie (511) respective, ledit élément de retenue (513) respectif comprenant une tête (513b) qui appuie contre la portion de connexion (21') respective de manière à couvrir au moins partiellement le siège (512) respectif, de sorte que ladite tête (513b) empêche l'échappement de la saillie (511) respective du siège (512) respectif au moins dans une direction parallèle à l'axe (X) de la couronne (2) ;
dans lequel chaque unité de connexion (51) est configurée pour permettre un mouvement de la saillie (511) respective dans le siège (512) respectif dans ladite direction, de manière à communiquer un jeu axial à la saillie (511) dans le siège (512), de sorte que ledit jeu axial puisse contribuer à permettre le flottement au moins axial du disque (3) par rapport à la couronne (2).

7. Frein (1) selon la revendication 6, dans lequel chacun desdits bord externe (511a) et bord interne (512a) est au moins partiellement arrondi.

8. Frein selon l'une quelconque des revendications 2 à 7, dans lequel ladite unité de fixation (41) comprend :
- un trou (411) respectif réalisé dans la portion de fixation (21) respective, l'unité de fixation (41) étant configurée de sorte que le trou (411) respectif réalisé dans la portion de fixation (21), dans ladite condition de fixation, est en communication avec un trou (611) réalisé dans le rayon (61) respectif ;
- un élément de fixation (412; 412') respectif comprenant une tige (412a; 412a') respective et configuré pour fixer la portion de fixation (21) respective au rayon (61) respectif par le passage de ladite tige (412a; 412a') respective à travers ledit trou (411) réalisé dans la portion de fixation (21) et le trou (611) réalisé dans le rayon (61).

9. Frein (1) selon la revendication 8, dans lequel, pour chaque unité de fixation (41) :
- l'élément de fixation (412) comprend une tête (412b) respective ;
- l'unité de fixation (41) est configurée de telle sorte que l'élément de fixation (412), pour fixer la portion de fixation (21) respective au rayon (61) respectif, peut agir selon un premier mode, de telle sorte qu'une portion d'extrémité (4121a) de la tige (412a) est fixée dans le trou (411) réalisé dans la portion de fixation (21), de manière à tirer la portion de fixation (21) à l'opposé du rayon (61), ou selon un second mode ; de telle sorte que la tête (412b') appuie sur la portion de fixation (21) à l'opposé du rayon (61).

10. Frein selon la revendication 9, dans lequel le système de fixation (4) est configuré pour que, dans la condition de fixation, les éléments de fixation (412) agissant selon le premier mode soient alternés, autour de l'axe (X) de la couronne, avec ceux (412') agissant selon le deuxième mode.

11. Système de freinage pour motocyclette, comprenant un premier frein (1) et un second frein (1'), dans lequel :
- ledit premier frein (1) est conforme à la revendication 10 ;
- ledit deuxième frein (1') est conforme à la revendication 10 ;
dans lequel le système de fixation (4) du premier frein (1) est configuré de telle sorte que :
- la condition de fixation de la couronne (2) du premier frein (1) correspond à la condition de fixation de la couronne (2') du deuxième frein (1), de sorte qu'une condition de fixation se produise au moyen de l'autre ;
- le système de fixation (4) du premier frein (1) peut définir simultanément la condition de fixation de la couronne (2) du premier frein (1) et la condition de fixation de la couronne (2') du deuxième frein (1') en faisant passer le système de fixation (4) à travers les rayons (61) de la roue (6) ;
- la condition de fixation des deux couronnes (2, 2') correspond au positionnement du premier frein (1) sur un côté de la roue (6) et du deuxième frein (1') sur le côté opposé de la roue (6) par rapport au premier frein (1) ;
pour chaque unité de fixation (41) du premier frein (1), l'élément de fixation (412; 412¹) agit dans le premier mode pour le premier frein (1) et dans le deuxième mode pour le deuxième frein (1'), ou vice versa.

12. Unité rotative pour motocyclette, comprenant un frein selon l'une quelconque des revendications 1 à 10 et ladite roue (6), ou comprenant un système de freinage selon la revendication 11 et ladite roue (6).

13. Motocyclette, comprenant une unité rotative selon la revendication 12.
